# EUROPEAN PATENT APPLICATION

(11) **EP 4 458 459 A1**
(43) Date of publication of application: **06.11.2024**
(21) Application number: 22915851.4
(22) Date of filing: 21.12.2022
(51) Int. Cl.: B01J 13/00, B32B 27/00, C08F 265/06

(54) **COMPOSITION FOR COLLOIDAL CRYSTALS, AND MULTILAYER BODY**

(30) Priority: 27.12.2021 JP 2021212995
(71) Applicant: artience Co., Ltd., Chuo-ku Tokyo 104-0031 (JP)
(72) Inventor: MAMIYA Michitaka, Tokyo 104-0031 (JP); NAKAZATO Atsushi, Tokyo 104-0031 (JP); OBA Kazutoshi, Tokyo 104-0031 (JP)
(74) Representative: Pfenning, Meinig & Partner mbB
(86) International application number: PCT/JP2022/047044
(87) International publication number: WO 2023/127627

(57) **Abstract**

The present invention provides: a composition for colloidal crystals, the composition having excellent coatability and long-term stability and being capable of forming a colloidal crystal that has excellent color developability and heat resistance; and a multilayer body which comprises a colloidal crystal layer that is formed from this composition for colloidal crystals and has excellent color developability and heat resistance. (1) The solid content concentration is 25% by mass or more. (2) The pH in an environment at 25°C is 4 to 14. (3) The viscosity in an environment at 25°C is 0.1 to 200 mPa·s. (4) The cores of the core-shell type resin fine particles have a glass transition temperature of 80°C or more. (5) The shells of the core-shell type resin fine particles have a glass transition temperature of 40°C or more.

## Description

### [Technical Field]

The present disclosure relates to a composition for colloidal crystals and a multilayer body including a colloidal crystal layer formed from the composition for colloidal crystals. Specifically, the present disclosure relates to a composition for colloidal crystals, which has excellent coating applicability and excellent long-term stability and is capable of forming a colloidal crystal layer having excellent coating applicability and excellent long-term stability, and a multilayer body that includes a colloidal crystal layer having excellent color developability and excellent heat resistance.

### [Background Art]

A photonic crystal is a nanoperiodic structure body in which substances having refractive indexes different from each other are arranged at intervals comparable to the wavelength of light. The refractive index changes periodically in the inside of the photonic crystal, and the photonic crystal exhibits various interesting optical characteristics such as the reflection of light at a specific wavelength, which is known as Bragg reflection, light confinement using the photonic band gap, and a high wave splitting effect. Therefore, it is currently being studied actively. A colloidal crystal, which is one kind of photonic crystal, has a structure in which resin fine particles or silica particles of the order of submicrons are regularly arranged, and it can be formed by applying a particle suspension onto a base material or the like and then carrying out drying.

The mechanism of formation of colloidal crystals, which is associated with the drying of the particle suspension, is as follows. First, the solvent vaporizes on the surface of the undried coating film that has been formed by subjecting a base material or the like to coating. In association with this, a convection flow is induced near the surface to compensate for the drying of the solvent, and particles are carried to the surface along with the flow. The carried particles are deposited and then subjected to the closest packing due to the lateral capillary force that acts in a case where the solvent dries.

As described above, the process of forming colloidal crystals is a process in which heat transfer, drying, and substance transfer are combined. Since colloidal crystals exhibit more excellent color developability (optical characteristics) as the particle arrangement is less disordered, it is important to control the particle arrangement.

In addition, the vivid color development of colloidal crystals is derived from the Bragg reflection that is caused by the difference in refractive index between the regularly arranged particle and the interparticle gap. The larger the difference in refractive index between the particle and the interparticle gap, the stronger the Bragg reflection. Therefore, colloidal crystals having the best color development can be obtained in a case where the interparticle gap is filled with air, except for inverted opal-type colloidal crystals.

However, since such colloidal crystals having excellent color developability have voids, the contact area between particles or between particles and a base material is reduced, which results in inferior abrasion resistance and inferior base material adherence. Further, in a case of resin fine particles, the shape of the particles easily changes upon heating, and thus the interparticle gap is filled, which results in the loss of the color development of colloidal crystals and the inferior heat resistance.

Patent Literature 1 discloses a composition for colloidal crystals, which contains core-shell type fine particles consisting of a core part and a shell part. Since a glass transition point of the core part is high and a glass transition point of the shell part is low, the shell part is fluidized upon heating, whereby a colloidal crystal in which the core part is regularly arranged in the shell part is obtained. In addition, since the shell part is easily fluidized upon heating, the shell part adheres to the base material, and polymeric chains are entangled between particles. As a result, colloidal crystals having excellent abrasion resistance and excellent base material adherence are obtained.

In addition, Patent Literature 2 describes a structural color coating film-forming coating material composition having excellent designability, which contains core-shell particles in which a carboxy group of a shell is neutralized by a basic component.

In addition, Patent Literature 3 describes a colloidal crystal that is formed from core-shell type fine particles and has excellent color developability, excellent abrasion resistance, and excellent base material followability since a shell is partially fused while leaving voids between the particles.

### [Citation List]

### [Patent Literature]

[Patent Literature 1]
   Japanese Patent Laid-Open No. 2014-047231
[Patent Literature 2]
   Japanese Patent Laid-Open No. 2009-249527
[Patent Literature 3]
   Japanese Patent No. 6879425

### [Summary of Invention]

### [Technical Problem]

The colloidal crystal of Patent Literature 1 has a large quantity of shell parts and is designed so that the shell part completely fills the interparticle gap in the core part upon heating. Therefore, there is a problem in that the difference in refractive index between the particle and the interparticle gap is small, and thus the color developability of the colloidal crystals to be formed is not excellent.

In the colloidal crystal described in Patent Literature 2, the resin that forms the shell part has a carboxy group and has a low molecular weight. Therefore, in a case where an appropriate amount of a basic component is added to a composition for colloidal crystals, the composition for colloidal crystals has an increased viscosity and exhibits thixotropy. Therefore, the viscosity after coating is high, and the formation of regular arrangement of particles which is associated with drying is inhibited, which results in a problem that the colloidal crystals to be obtained do not have excellent color developability.

The colloidal crystal described in Patent Literature 3 is designed so that the shell is easily fluidized upon heating. Therefore, there is such a problem in heat resistance that the interparticle gap is easily filled completely with the shell upon heating, and thus the color development is impaired.

As described above, the composition for colloidal crystals in the related art has difficulty in forming a regular arrangement of particles, immobilizing particles, and imparting heat resistance to particles, and thus a composition for colloidal crystals, which has excellent coating applicability and excellent long-term stability and achieves all of color developability, heat resistance, abrasion resistance, and base material adherence, has not been realized.

An objective to be achieved by the present disclosure is to provide a composition for colloidal crystals, which has excellent coating applicability and excellent long-term stability and is capable of forming colloidal crystals having excellent color developability and excellent heat resistance, and a multilayer body formed from the composition for colloidal crystals, the multilayer body including a colloidal crystal layer having excellent color developability and excellent heat resistance.

### [Solution to Problem]

A composition for colloidal crystals according to one aspect of the present disclosure is characterized by containing core-shell type resin fine particles and water, where the composition for colloidal crystals satisfies the following conditions (1) to (5).
(1) A solid content concentration is 25% by mass or more.
(2) A pH in an environment at 25°C is 4 to 14.
(3) A viscosity in the environment at 25°C is 0.1 to 200 mPa·s.
(4) A glass transition point of cores in the core-shell type resin fine particles is 80°C or higher.
(5) A glass transition point of shells in the core-shell type resin fine particles is 40°C or higher.

The composition for colloidal crystals according to one aspect of the present disclosure is characterized in that a resin that forms the shells of the core-shell type resin fine particles has an acid value of 5 to 150 mgKOH/g.

The composition for colloidal crystals according to one aspect of the present disclosure is characterized in that a resin that forms the shells of the core-shell type resin fine particles has an average molecular weight of 50,000 or more.

The composition for colloidal crystals according to one aspect of the present disclosure is characterized in that a content of the shells in the core-shell type resin fine particles is 10% to 150% by mass based on a mass of the cores.

The composition for colloidal crystals according to one aspect of the present disclosure is characterized in that a surface tension in the environment at 25°C is 10 to 50 mN/m.

A multilayer body according to one aspect of the present disclosure is characterized by including a colloidal crystal layer that is formed, on a base material, by using the composition for colloidal crystals.

### [Advantageous Effects of Invention]

According to the present disclosure, it is possible to provide a composition for colloidal crystals, which has excellent coating applicability and excellent long-term stability and is capable of forming colloidal crystals having excellent color developability and excellent heat resistance, and a multilayer body formed from the composition for colloidal crystals, the multilayer body including a colloidal crystal layer having excellent color developability and excellent heat resistance.

### [Description of Embodiments]

Hereinafter, the requirements that constitute the present disclosure will be described in detail.

### <Composition for colloidal crystals>

The composition for colloidal crystals according to the present disclosure is characterized by containing core-shell type resin fine particles and water, where the composition for colloidal crystals satisfies the following conditions (1) to (5).
(1) A solid content concentration is 25% by mass or more.
(2) A pH in an environment at 25°C is 4 to 14.
(3) A viscosity in the environment at 25°C is 0.1 to 200 mPa·s.
(4) A glass transition point of cores in the core-shell type resin fine particles is 80°C or higher.
(5) A glass transition point of shells in the core-shell type resin fine particles is 40°C or higher.

The composition according to the present disclosure has excellent coating applicability due to having a predetermined solid content and viscosity, and it has excellent long-term stability due to having a predetermined pH and viscosity. In addition, the composition according to the present disclosure can form high-quality colloidal crystals having excellent color developability due to having a predetermined solid content, pH, and viscosity. In addition, the composition according to the present disclosure has excellent heat resistance, excellent abrasion resistance, and excellent base material adherence since the core and shell of the core-shell type resin fine particle have a predetermined glass transition point.

### [Core-shell type resin fine particle]

The colloidal crystal in the present specification develops a structural color derived from the Bragg reflection and controls the periodic interval of the refractive index by controlling the particle diameter of the core-shell type resin fine particle, which makes it possible to develop various colors.

The core-shell type resin fine particle consists of a structure of a core (inner layer) and a shell (outer layer), where both the core and shell are a water-insoluble resin and are incompatible with each other. In the core-shell type resin fine particle, the core plays a role in maintaining a spherical shape, and the shell plays a role in binding between particles or to particles and a base material, by being fluidized upon heating or the like.

In the composition for colloidal crystals, the core-shell type resin fine particles are present in a form of a dispersion, and they are regularly subjected to the closest packing to be stacked in the process of being coated on a base material and then being dried. Subsequently, the heat energy equal to or larger than a certain level is applied to the formed colloidal crystals to partially fuse the shells with each other at a contact portion between the core-shell type particles, whereby colloidal crystals, in which the particles in the colloidal crystal layer or the particles and a base material are bonded together and the interparticle gap is filled with air, are formed. As a result, a multilayer body having the resultantly obtained colloidal crystals exhibits a vivid structural color and has excellent abrasion resistance and excellent base material followability.

In the core-shell type resin fine particle, it is important that the core has a glass transition point of 80°C or higher and the shell has a glass transition point of 40°C or higher. In a case where the glass transition point of the core is 80°C or higher, the deformation of the shape of the core due to the influence of external heat or force is suppressed. This makes it possible to maintain excellent color development even in a case where the multilayer body is heated to form crosslinks or in a case where the multilayer body is stored at high temperatures for a long period of time. In a case where the glass transition point of the shell is 40°C or higher, excellent color development can be maintained even in a case where the multilayer body is stored at high temperatures for a long period of time, for example, in a case where it is installed in the vicinity of a light source.

The glass transition point of the core is preferably 100°C to 180°C, and the glass transition point of the shell is preferably 40°C to 130°C. In a case where the glass transition point is within the above-described range, it is possible to separate the functions of the core which maintains the particle shape, and the shell which serves as a binding point between particles or for the surface in contact with the colloidal crystal layer, and it is possible to achieve all of color developability, heat resistance, abrasion resistance, and base material adherence. The core and the shell may each have a plurality of glass transition points.

In the present specification, the glass transition point can be measured with a differential scanning calorimeter (DSC).

### [Kind of core-shell type resin fine particle and manufacturing method therefor]

The core-shell type resin fine particle in the present disclosure is not particularly limited; however, it is preferably a polymer of an ethylenically unsaturated monomer, more preferably an acrylic resin, and still more preferably a styrene acrylic resin.

A method of manufacturing core-shell type resin fine particles is not particularly limited, and examples thereof include a method of polymerizing an ethylenically unsaturated monomer in an aqueous medium, as in the emulsion polymerization, and a phase inversion emulsification method in which polymerization is carried out in a nonaqueous system and then phase inversion is carried out to an aqueous phase while carrying out desolvation. However, it is preferable to use emulsion polymerization from the viewpoints of the controllability of particle monodispersity, which is important for the color developability of colloidal crystals, and the ability to reduce the concentration at a high solid content concentration, which is important for the formation of high-quality colloidal crystals.

In the emulsion polymerization, any one of two-stage polymerization in which a monomer is dropwise added by changing the composition thereof in the first stage and the second stage or multi-stage polymerization in which a monomer is dropwise added by changing the composition thereof in three or more stages may be used. In a case where the two-stage polymerization method, it is possible to prepare core-shell type resin fine particles, for example, by the procedure shown below.
(1) First, an aqueous medium and a surfactant are charged into a reaction chamber and the temperature is raised. Thereafter, a radical polymerization initiator is added thereto while dropwise adding an emulsified liquid of the first-stage ethylenically unsaturated monomer that forms the core, in a nitrogen atmosphere. After the start of the reaction, the particles gradually grow to form core particles depending on the amount dropwise added.
(2) Next, at the time when the first-stage dropwise addition has completed and the heat generation has subsided, the second stage of dropwise addition of the emulsified liquid of the ethylenically unsaturated monomer that forms the shell is started. At this time, an additional initiator may be added. Although the dropwise added second-stage ethylenically unsaturated monomer is once distributed to the core particles, it is precipitated as a polymer on the outer layer of the core particle as the polymerization progresses, whereby a shell layer is formed.

Examples of the ethylenically unsaturated monomer include aromatic ethylenically unsaturated monomer such as styrene, α-methylstyrene, o-methylstyrene, p-methylstyrene, m-methylstyrene, vinylnaphthalene, benzyl (meth)acrylate, phenoxyethyl (meth)acrylate, phenoxydiethylene glycol (meth)acrylate, phenoxytetraethylene glycol (meth)acrylate, phenoxyhexaethylene glycol (meth)acrylate, phenoxyhexaethylene glycol (meth)acrylate, and phenyl (meth)acrylate; ethylenically unsaturated monomers containing a linear or branched alkyl group, such as methyl (meth)acrylate, ethyl (meth)acrylate, propyl (meth)acrylate, n-butyl (meth)acrylate, t-butyl (meth)acrylate, pentyl (meth)acrylate, heptyl (meth)acrylate, hexyl (meth)acrylate, 2-ethylhexyl (meth)acrylate, octyl (meth)acrylate, nonyl (meth)acrylate, decyl (meth)acrylate, undecyl (meth)acrylate, lauryl (meth)acrylate, tridecyl (meth)acrylate, tetradecyl (meth)acrylate, pentadecyl (meth)acrylate, hexadecyl (meth)acrylate, heptadecyl (meth)acrylate, stearyl (meth)acrylate, isostearyl (meth)acrylate, and behenyl (meth)acrylate; ethylenically unsaturated monomers containing alicyclic alkyl groups, such as cyclohexyl (meth)acrylate, isobornyl (meth)acrylate, dicyclopentenyl (meth)acrylate, dicyclopentanyl (meth)acrylate, and adamantyl (meth)acrylate; ethylenically unsaturated monomers containing a fluorinated alkyl group, such as trifluoroethyl (meth)acrylate and heptadecafluorodecyl (meth)acrylate; ethylenically unsaturated monomers containing a carboxy group, such as (anhydrous) maleic acid, fumaric acid, itaconic acid, citraconic acid, or an alkyl or alkenyl monoester thereof, a succinic acid β-(meth)acryloxyethyl monoester, acrylic acid, methacrylic acid, crotonic acid, and cinnamic acid; ethylenically unsaturated monomers containing a sulfo group, such as sodium 2-acrylamide 2-methylpropanesulfonate, methallyl sulfonic acid, methallyl sulfonic acid, sodium methallyl sulfonate, allyl sulfonic acid, sodium allyl sulfonate, ammonium allyl sulfonate, and vinyl sulfonic acid; ethylenically unsaturated monomers containing an amide group, such as (meth)acrylamide, N-methoxymethyl-(meth)acrylamide, N-ethoxymethyl-(meth)acrylamide, N-propoxymethyl-(meth)acrylamide, N-butoxymethyl-(meth)acrylamide, N-pentoxymethyl-(meth)acrylamide, N,N-di(methoxymethyl)acrylamide, N-ethoxymethyl-N-methoxymethylmethacrylamide, N,N-di(ethoxymethyl)acrylamide, N-ethoxymethyl-N-propoxymethyl methacrylamide, N,N-di(propoxymethyl)acrylamide, N-butoxymethyl-N-(propoxymethyl)methacrylamide, N,N-di(butoxymethyl)acrylamide, N-butoxymethyl-N-(methoxymethyl)methacrylamide, N,N-di(pentoxymethyl)acrylamide, N-methoxymethyl-N-(pentoxymethyl)methacrylamide, N,N-dimethylaminopropyl acrylamide, N,N-diethylaminopropyl acrylamide, N,N-dimethyl acrylamide, N,N-diethyl acrylamide, and diacetone acrylamide; ethylenically unsaturated monomers containing a hydroxyl group, such as 2-hydroxyethyl (meth)acrylate, 2-hydroxypropyl (meth)acrylate, 4-hydroxybutyl (meth)acrylate, glycerol mono(meth)acrylate, 4-hydroxyvinylbenzene, 1-ethynyl-1-cyclohexanol, and allyl alcohol; ethylenically unsaturated monomers containing a polyoxyethylene group, such as methoxypolyethylene glycol (meth)acrylate and polyethylene glycol (meth)acrylate; ethylenically unsaturated monomers containing an amino group, such as dimethylaminoethyl (meth)acrylate, diethylaminoethyl (meth)acrylate, methylethylaminoethyl (meth)acrylate, dimethylaminostyrene, and diethylaminostyrene; ethylenically unsaturated monomers containing an epoxy group, such as glycidyl (meth)acrylate and 3,4-epoxycyclohexyl (meth)acrylate; ethylenically unsaturated monomers containing a keto group, such as diacetone (meth)acrylamide, acetoacetoxy (meth)acrylate, and 2-acetoacetoxyethyl (meth)acrylate; ethylenically unsaturated monomers having two or more ethylenically unsaturated groups, such as allyl (meth)acrylate, 1-methylallyl (meth)acrylate, 2-methylallyl (meth)acrylate, 1-butenyl (meth)acrylate, 2-butenyl (meth)acrylate, 3-butenyl (meth)acrylate, 1,3-methyl-3-butenyl (meth)acrylate, 2-chloroallyl (meth)acrylate, 3-chloroallyl (meth)acrylate, o-allylphenyl (meth)acrylate, 2-(allyloxy)ethyl (meth)acrylate, allyllactyl (meth)acrylate, citronellyl (meth)acrylate, geranyl (meth)acrylate, rhodinyl (meth)acrylate, cinnamyl (meth)acrylate, diallyl maleate, diallylitaconic acid, vinyl (meth)acrylate, vinyl crotonate, vinyl oleate, vinyl linolenate, 2-(2'-vinyloxyethoxy)ethyl (meth)acrylate, ethylene glycol di(meth)acrylate, triethylene glycol (meth)acrylate, tetraethylene glycol (meth)acrylate, trimethylolpropane tri(meth)acrylate, pentaerythritol tri(meth)acrylate, 1,1,1-trishydroxymethylethane diacrylate, 1,1,1-trishydroxymethylethane triacrylate, 1,1,1-trishydroxymethylpropane triacrylate, divinylbenzene, divinyl adipate, diallyl isophthalate, diallyl phthalate, and diallyl maleate; ethylenically unsaturated monomers containing an alkoxysilyl group, such as γ-methacryloxypropyltrimethoxysilane, γ-methacryloxypropyltriethoxysilane, γ-methacryloxypropyltributoxysilane, γ-methacryloxypropylmethyldimethoxysilane, γ-methacryloxypropylmethyldiethoxysilane, γ-acryloxypropyltrimethoxysilane, γ-acryloxypropyltriethoxysilane, γ-acryloxypropylmethyldimethoxysilane, γ-methacryloxymethyltrimethoxysilane, γ-acryloxymethyltrimethoxysilane, vinyltrimethoxysilane, vinyltriethoxysilane, vinyltributoxysilane, and vinylmethyldimethoxysilane; and ethylenically unsaturated monomers containing a methylol group such as N-methylol (meth)acrylamide, N,N-dimethylol (meth)acrylamide, and an alkyl etherified N-methylol (meth)acrylamide. One kind of these monomers may be used alone, or two or more kinds thereof may be used in combination.

The ethylenically unsaturated monomer that is used for forming the core-shell type resin fine particles may have a reactive group for the intended purpose of forming crosslinks within the colloidal crystal layer and between the colloidal crystal layer and a layer in contact with the colloidal crystal layer. In a case where crosslinks are formed within the colloidal crystal layer and between the colloidal crystal layer and a layer in contact with the colloidal crystal layer, the multilayer body has excellent abrasion resistance and excellent base material adherence.

The crosslinking within the colloidal crystal layer and between the colloidal crystal layer and a layer in contact with the colloidal crystal layer can be introduced by, for example, a method of reacting reactive groups of core-shell type resin fine particles with each other, a method of reacting a reactive group of core-shell type resin fine particles with a reactive group contained in a layer in contact with a colloidal crystal layer, such as a primer layer described later, a method of crosslinking reactive groups of core-shell type resin fine particles through a polyfunctional crosslinking agent, or a method of crosslinking, through a polyfunctional crosslinking agent, a reactive group of core-shell type resin fine particles with a reactive group contained in a layer in contact with a colloidal crystal layer, such as a primer layer described later.

Examples of the above-described reactive group include an epoxy group, a carboxy group, a hydroxyl group, a ketone group, and a hydrazide group, where more preferred one is a carboxy group, a hydroxyl group, or ketone group. In particular, it is preferable to contain a reactive group in the shell of the core-shell type resin fine particle since crosslinking within the colloidal crystal layer and between the colloidal crystal layer and a layer in contact with the colloidal crystal layer progresses efficiently.

In a case where the core-shell type resin fine particle has a crosslinking group in the shell, the content of the crosslinking group in the shell is preferably in a range of 0.1 to 3.0 mmol/g and more preferably in a range of 0.5 to 3.0 mmol/g based on the mass of the core-shell type resin fine particle. In a case where it is in a range of 0.1 mmol/g or more, the excellent abrasion resistance and the excellent base material adherence are exhibited due to the crosslinking even in a multilayer body in which the contact area between particles or between particles and a base material is small. In addition, in a case where it is in a range of 3.0 mmol/g or less, the composition for colloidal crystals has excellent long-term stability.

### (Radical polymerization initiator)

As a radical polymerization initiator that is used for manufacturing the core-shell type resin fine particles, a publicly known oil-soluble polymerization initiator or water-soluble polymerization initiator can be used, where one kind of these may be used alone, or two or more kinds thereof may be mixed and used in combination.

The oil-soluble polymerization initiator is not particularly limited, and examples thereof include organic peroxides such as benzoyl peroxide, tert-butyl peroxybenzoate, tert-butyl hydroperoxide, tert-butyl peroxy(2-ethylhexanoate), tert-butyl peroxy-3,5,5-trimethylhexanoate, and di-tert-butyl peroxide; and azobis compounds such as 2,2'-azobisisobutyronitrile, 2,2'-azobis-2,4-dimethylvaleronitrile, 2,2'-azobis(4-methoxy-2,4-dimethylvaleronitrile), and 1,1'-azobis-cyclohexane-1-carbonitrile.

In the emulsion polymerization, it is preferable to use a water-soluble polymerization initiator. As the water-soluble polymerization initiator, the known ones in the related art, such as ammonium persulfate (APS), potassium persulfate (KPS), hydrogen peroxide, or 2,2'-azobis-(2-methylpropionamidine)dihydrochloride, can be suitably used.

### (Surfactant)

A surfactant is generally used in the manufacturing of core-shell type resin fine particles, and the stability and monodispersity of the resin fine particles can be improved by using a surfactant. Examples of the surfactant include an anionic or nonionic surfactant, where an anionic surfactant is preferable. One kind of these may be used alone, or two or more kinds thereof may be used in combination.

Examples of the surfactant include a nonionic reactive surfactant, an anionic non-reactive surfactant, a nonionic reactive surfactant, and a nonionic non-reactive surfactant. Here, the reactive surfactant refers to a surfactant that is capable of being polymerized with the ethylenically unsaturated monomer described above. More specifically, it means a surfactant having a reactive group that is capable of undergoing polymerizing with an ethylenically unsaturated bond. Examples of the reactive group include an alkenyl group such as a vinyl group, an allyl group, or a 1-propenyl group, and a (meth)acryloyl group.

In a case where a reactive surfactant is used, a free surfactant component contained in the composition for colloidal crystals is reduced, and the adverse effect on the arrangement of particles of colloidal crystals is suppressed. Therefore, it is possible to obtain a multilayer body that has a form of a thin film and exhibits more vivid color development.

### (Other components)

In the manufacturing of the core-shell type resin fine particles, a reducing agent, a buffer agent, a chain transfer agent, and a neutralizing agent can be used as necessary.

### [Properties of core-shell type resin fine particle]

### (Average particle diameter of core-shell type resin fine particles)

The average particle diameter of the core-shell type resin fine particles is preferably in a range of 100 to 500 nm. It is noted that the average particle diameter in the present specification can be measured according to a dynamic light scattering method, and a peak value in the obtained volume particle diameter distribution data (histogram) is defined as the average particle diameter.

In addition, the coefficient of variation (Cv value) of the average particle diameter of the core-shell type resin fine particles is preferably 30% or less and more preferably 20% or less. In a case where the coefficient of variation is 30% or less, the regularity of the particle arrangement is improved, and the color developability of the multilayer body is further improved. The coefficient of variation is a numerical value that indicates the degree of uniformity of particle diameters, and it can be calculated according to the following expression. Coefficient of variation Cv value (%) = standard deviation of particle diameter/average diameter × 100 [In the expression, the units of standard deviation and average particle diameter are the same.]

### (Content of shell of core-shell type resin fine particle)

The content of the shell in the core-shell type resin fine particle is preferably in a range of 10% to 150% by mass based on the mass of the core. In a case where the content of the shell is 10% by mass or more, the heat energy equal to or larger than a certain level is applied to partially fuse the shells with each other at a contact portion between the core-shell type particles, and the binding between core-shell type resin fine particles or between core-shell type resin fine particles and a primer layer is strong, which provides excellent abrasion resistance and excellent base material followability, to the multilayer body. In a case where the content of the shell is 150% by mass or less, the deterioration of color developability is suppressed, which is caused by the filling of voids due to excessive fusion of the shells, in a case where a composition for a colloidal crystal is dried and the multilayer body is stored at a high temperature for a long period of time. In addition, since the amount of a resin component dissolved in a composition for colloidal crystals is significantly reduced in a case where an alkali is added to the composition for colloidal crystals, the composition for colloidal crystals does not exhibit thixotropy, and thus the color developability and heat resistance of the multilayer body to be obtained are improved. The content of the shell is preferably in a range of 10% to 100% by mass.

### (Weight average molecular weight of shell)

The weight average molecular weight of the resin that forms the shell of the core-shell type resin fine particle is preferably 50,000 or more and more preferably 100,000 or more. In a case where the molecular weight of the shell is 50,000 or more, the amount of a resin component dissolved in a composition for colloidal crystals is significantly reduced in a case where an alkali is added to the composition for colloidal crystals. Therefore, the composition for colloidal crystals does not exhibit thixotropy, and thus the formation of the regular arrangement of particles, which is associated with drying, is not inhibited. As a result, the colloidal crystals to be obtained have excellent color developability, and the composition for colloidal crystals also has good long-term stability.

### (Acid value of shell)

The acid value of the resin that forms the shell of the core-shell type resin fine particle is preferably 5 to 150 mgKOH/g and more preferably 10 to 100 mgKOH/g based on the mass of the shell. In a case where the acid value is 5 mgKOH/g or more, a sufficient electrostatic repulsive force is generated between the core-shell type resin fine particles in the composition for colloidal crystals. As a result, the colloidal crystals to be obtained have excellent color developability, and the composition for colloidal crystals also has good long-term stability. In a case where the acid value is 150 mgKOH/g, the amount of the resin component dissolved in the composition for colloidal crystals is significantly reduced, and thus the formation of the regular arrangement of particles, which is associated with drying, is not inhibited. As a result, the colloidal crystals to be obtained have excellent color developability, and the composition for colloidal crystals also has good long-term stability.

The acid value of the shell can be obtained by carrying out a potentiometric titration using an emulsion solution with a potassium hydroxide/ethanol solution in accordance with JIS K2501 and then carrying out the calculation. Specifically, the acid value of the shell can be determined as follows, with reference to the method described in paragraphs 0014 to 0016 of Japanese Patent Laid-Open No. 2007-003454. In a case where core-shell type particles are used, four inflection points (P1, P2, P3, and P3') and the corresponding titration amounts (A1, A2, A3, and A3') are obtained in the descending order of the amount dropwise added in a titration curve obtained by neutralization of acid groups in an aqueous phase within an emulsion. The inflection point P3 is derived from the shell resin, and the inflection point P3' is derived from the core resin. In a case where the inflection point is not clearly observed, a differential curve of the titration may be created to obtain the titration amount.

The titration amounts (A1, A2, A3, and A3') mean the following titration amounts.
· A1 is a titration amount required to neutralize components unrelated to the core-shell type particle.
· (A2 - A1) is a titration amount required to neutralize acid groups on the surface of the core-shell type particle.
· (A3 - A2) is a titration amount required to neutralize acid groups of the shell resin inside the particle, excluding the surface of the core-shell type particle.
· (A3' - A3) is a titration amount required to neutralize acid groups of the core resin inside the core-shell type particle.

From the above, (A3 - A1) is defined as a titration amount derived from the acid groups of the shell, and the acid value of the shell can be calculated from this titration amount.

### [Hydrophilic solvent]

The composition for colloidal crystals according to the present disclosure may contain a hydrophilic solvent. In a case where an appropriate hydrophilic solvent is selected, it is possible to adjust the surface tension of the composition for colloidal crystals, maintain excellent color development, and obtain a multilayer body that is uniform and has a high quality. In addition, in a case where the fusion of the shells is promoted, it is possible to obtain a multilayer body having excellent abrasion resistance and excellent base material adherence.

Examples of the hydrophilic solvent that can be used in the present disclosure include monovalent lower monoalcohol solvents such as 1-propanol, 1-butanol, 2-methyl-1-propanol, 2-propanol, and 2-butanol; glycol-based solvents such as ethylene glycol, 1,3-propanediol, propylene glycol 1,2-butanediol, 1,4-butanediol, pentylene glycol, 1,2-hexanediol, 1,6-hexanediol, and diethylene glycol; glycol ether-based solvents such as ethylene glycol monomethyl ether, diethylene glycol monomethyl ether, triethylene glycol monoethyl ether, ethylene glycol monoethyl ether, diethylene glycol monoethyl ether, ethylene glycol monoisopropyl ether, diethylene glycol monoisopropyl ether, ethylene glycol monobutyl ether, diethylene glycol monobutyl ether, ethylene glycol monoisobutyl ether, ethylene glycol monohexyl ether, diethylene glycol dimethyl ether, triethylene glycol dimethyl ether, propylene glycol monomethyl ether, dipropylene glycol monomethyl ether, dipropylene glycol dimethyl ether, and tripropylene glycol monomethyl ether; lactam-based solvents such as N-methyl-2-pyrrolidone, N-hydroxyethyl-2-pyrrolidone, and 2-pyrrolidone; and amide-based solvents such as formamide, 3-methoxy-N,N-dimethylpropionamide, and 3-butoxy-N,N-dimethylpropanamide. One kind of these hydrophilic solvents may be used alone, or two or more kinds thereof may be used in combination.

### [Surfactant]

The composition for colloidal crystals according to the present disclosure may contain a surfactant. In a case where an appropriate surfactant is selected, it is possible to adjust the surface tension of the composition for colloidal crystals, maintain excellent color development, and obtain a multilayer body that is not uneven and has a high quality. In addition, the wettability of the composition for colloidal crystals to a base material or a primer layer described later is improved, which makes it possible to obtain a multilayer body having excellent adherence.

The surfactant to be added to the composition for colloidal crystals includes an anionic or nonionic surfactant, and a nonionic surfactant is preferable since it is possible to obtain a multilayer body that does not inhibit the electrostatic repulsive force between core-shell type resin fine particles but exhibits excellent color developability.

Examples of the nonionic surfactants include EMULGEN 120, 220, 350, 420, 1108, A-60, A-90, and B-66 manufactured by Kao Corporation, NOIGEN XL-50, XI,-60, XL-70, XI,-80, XI,-100, TDS-50, TDS-70, TDS-80, TDS-100, TDS-120, TDX-50, TDX-80, EA-87, EA- 137, EA-157, EA-167, and EA-177 manufactured by DKS Co., Ltd., BYK-3410, BYK-3455, and BYK-DYNWET 800 manufactured by BYK JAPAN KK, and SURFYNOL 420, 440, 465, and 485 manufactured by Nissin Chemical Co., Ltd. One kind of these may be used alone, or two or more kinds thereof may be used in combination.

### [Crosslinking agent]

As described above, the composition for colloidal crystals according to the present disclosure may contain a crosslinking agent in order to form crosslinks within the colloidal crystal layer and between the colloidal crystal layer and a layer (hereinafter, an adjacent layer) in contact with the colloidal crystal layer.

The crosslinking agent is not particularly limited and can be selected as appropriate depending on the reactive group contained in the colloidal crystal layer or the adjacent layer. Examples thereof include a hydrazide compound (polyhydrazide) having two or more hydrazino groups that react with an active carbonyl group to form a keto-hydrazide crosslink; an isocyanate compound that reacts with a hydroxyl group or an amino group to form a urethane bond or a urea bond; and an epoxy compound, a carbodiimide compound, an oxazoline compound, which reacts with a carboxy group or an amino group, which can be appropriately selected depending on the use application.

More specifically, a crosslink can be formed through an epoxy crosslinking agent, for example, in a case where a component that constitutes the core-shell type resin fine particles or the adjacent layer has a carboxy group. In addition, a crosslink can be formed through a polyisocyanate crosslinking agent, for example, in a case where a component that constitutes the core-shell type resin fine particles or the adjacent layer has a hydroxyl group. In addition, crosslinking can be carried out through a hydrazide crosslinking agent, for example, in a case where a component that constitutes the core-shell type resin fine particles or the adjacent layer has a ketone group.

In particular, a crosslinking agent that is nonionic and consists only of a low molecular weight component is preferable since it does not inhibit the formation of the regular arrangement of particles, which is associated with drying.

Examples of the crosslinking agent that can be used in the present disclosure include a water-soluble polyfunctional oxazoline compound such as EPOCROS WS-300, WS-500, or WS-700, manufactured by Nippon Shokubai Co., Ltd.; a water-soluble polyfunctional carbodiimide compound such as V-02, V-02-L2, SV-02, V-04, or V-10, manufactured by Nisshinbo Chemical Inc., and a water-soluble polyfunctional epoxy compound such as DENACOL EX-614B, EX-313, EX-512, EX-321, or EX-321L, manufactured by Nagase ChemteX Corporation; a polyhydrazide compound such as adipic acid hydrazide, sebacic acid dihydrazide, or isophthalic acid dihydrazide; and a polyisocyanate compound such as WB40-100 or WT30-100, manufactured by Asahi Kasei Corporation, and AQUANATE 105 or 140, manufactured by Tosoh Corporation.

### [Neutralizing agent]

The composition for colloidal crystals according to the present disclosure may contain a neutralizing agent. In a case where at least a part of the carboxy groups contained in the shells of the core-shell type resin fine particles are neutralized, the electrostatic repulsive force between the core-shell type resin fine particles is improved, and the aggregation of the core-shell type resin fine particles is significantly suppressed. In addition, in a case where the electrostatic repulsive force between the core-shell type resin fine particles is improved, the precision of the regular arrangement of the particles is improved where the regular arrangement is formed concurrently with drying. Therefore, it is possible to reduce the influence on not only the long-term stability of the composition for colloidal crystals but also the formation of the regular arrangement of particles, which is associated with drying, in a case where various additives such as a hydrophilic solvent, a surfactant, and a crosslinking agent are added to the composition for colloidal crystals. As a result, it is possible to achieve all of the coating applicability of the composition for colloidal crystals, the color developability, abrasion resistance, and base material adherence of the multilayer body.

Among the above, it is preferable to contain a basic neutralizing agent from the viewpoint of controlling the pH of the composition for a colloidal crystal within a range of 4 to 14 as described later.

Examples of the basic neutralizing agent that can be used in the present disclosure include alkali metal hydroxides such as lithium hydroxide, sodium hydroxide, potassium hydroxide, and cesium hydroxide; organic amines such as trimethylamine, ethylamine, diethylamine, and triethylamine; and ammonia. Ammonia or an organic amine is preferable from the viewpoint that it is easily volatilized upon heating.

### <Properties of composition for colloidal crystals>

### [Solid content concentration]

It is important that the solid content of the composition for colloidal crystals according to the present disclosure is 25% by mass, where 25% to 70% by mass is more preferable.

In a case where the solid content is 25% by mass or more, an increase in surface tension or a decrease in viscosity can be suppressed, and the composition for colloidal crystals has excellent coating applicability. In addition, in a case where the composition for colloidal crystals contains an additive such as a surfactant, and a hydrophilic solvent, the blending amounts of these are adjusted with respect to the total amount of the composition. Therefore, in a case where the solid content is 25% by mass or more, the ratio of this surfactants or hydrophilic solvent to the core-shell type resin fine particles is not be too high, and the influence of the additives on the formation of the regular arrangement of particles can be minimized. Therefore, the multilayer body to be obtained has excellent color developability. Further, even a composition for colloidal crystals, which has such a low viscosity that the formation of the regular arrangement of particles which is associated with drying is not inhibited, makes it possible to form a multilayer body having a thickness equal to or larger than a certain thickness. As a result, it is possible to obtain a multilayer body having a strong Bragg reflection and excellent color developability. In a case where the solid content is 70% by mass or less, the composition for colloidal crystals has good long-term stability.

It is noted that in the present disclosure, the preferred film thickness of the proportion of the core-shell type resin fine particles in multilayer body is 5 to 100 µm in the solid content of the composition for colloidal crystals.

### [Proportion of core-shell type resin fine particles in solid content]

The proportion of the core-shell type resin fine particles in the solid content of the composition for colloidal crystals according to the present disclosure is preferably 80% by mass or more and more preferably 90% by mass or more. In a case where the proportion of the core-shell type resin fine particles in the solid content is 80% by mass or more, air easily remains in the interparticle gap in a case where colloidal crystals are formed, and thus the color developability of the multilayer body is improved.

### [Viscosity]

It is important that the viscosity of the composition for colloidal crystals according to the present disclosure is 0.1 to 200 mPa s, where 5.0 to 100 mPa·s is preferable.

In a case where the viscosity is 200 mPa s or less, the movement of particles associated with the vaporization of the solvent or the closest packing of particles due to the lateral capillary force is not adversely affected. As a result, it is possible to obtain a multilayer body having excellent color developability. In addition, in a case where the viscosity is 0.1 mPa·s or more, it is possible to suppress the occurrence of unevenness during coating. As a result, the coating applicability of the composition for colloidal crystals is improved.

In the present disclosure, the viscosity is a viscosity that is measured in an environment at 25°C in a case where a B-type viscometer is used and a rotor is rotated at 30 rpm.

### [pH]

It is important that the pH of the composition for colloidal crystals according to the present disclosure is 4 to 14, and it is preferable that at least a part of the carboxy groups contained in the shells of the core-shell type resin fine particles are neutralized by the above-described basic neutralizing agent (hereinafter, referred to as a basic component). In a case where the carboxy groups of the shell are neutralized by the basic component, the electrostatic repulsive force between the core-shell type resin fine particles is improved, the aggregation is suppressed, and the long-term stability of the composition for colloidal crystals is improved. In addition, in a case where the electrostatic repulsive force between the core-shell type resin fine particles is improved, the precision of the regular arrangement of the particles is improved where the regular arrangement is formed concurrently with drying.

In general, in a case where a component other than water, such as a hydrophilic solvent, a surfactant, or a crosslinking agent, is blended in a composition for colloidal crystals, the specific dielectric constant of the medium decreases. However, in a case where core-shell type resin fine particles that are neutralized and have a sufficiently large surface negative charge are used, the high electrostatic repulsive force between particles is maintained, which makes it possible to achieve all of color developability, coating applicability, adherence, base material followability, and the like.

It is noted that in a case where the carboxy groups contained in the shells of the core-shell type resin fine particles are neutralized by a basic component, the amount of the water-soluble resin component in the system increases, which may increase the viscosity of the composition for colloidal crystals. However, in the composition for colloidal crystals according to the present disclosure, preferably at least a part of the carboxy groups contained in the shells of the core-shell type resin fine particles are neutralized by a basic component, and no significant increase in viscosity occurs in association with neutralization. As a result, the pH is 4 to 14, and the composition for colloidal crystals achieves a viscosity in a range of 0.1 to 200 mPa·s.

In a case where the composition for colloidal crystals has a pH and a viscosity in the above-described ranges, respectively, the composition for colloidal crystals maintains good stability, and the movement of particles associated with the evaporation of the solvent or the closest packing due to the lateral capillary force is not adversely affected. As a result, it is possible to obtain a multilayer body that has excellent long-term stability of the composition for colloidal crystals and exhibits good color developability.

The pH of the composition for colloidal crystals is preferably 7 to 12.

### [Surface tension]

The surface tension of the composition for colloidal crystals according to the present disclosure is preferably 10 to 50 mN/m and more preferably 20 to 50 mN/m.

In a case where the surface tension is 10 mN/m, the lateral capillary force acts appropriately between the particles in association with drying, and thus colloidal crystals in which the particles have been subjected to the closest packing are formed. As a result, the color developability of the multilayer body to be obtained is improved. In a case where the surface tension is 50 mN/m or less, the application suitability of the composition for colloidal crystals is improved, and thus a uniform colloidal crystal layer can be formed. In addition, since the wettability to the base material or the primer layer is improved, the base material adherence of the multilayer body to be obtained to the base material is improved.

It is noted that the surface tension in the present specification can be measured according to the plate method (Wilhelmy method) using a surface tension meter in an environment at 25°C.

### <Multilayer body>

The multilayer body according to the present disclosure includes a colloidal crystal layer that is formed, on a base material, by using the composition for colloidal crystals described above, and it can be manufactured by, for example, subjecting the composition for colloidal crystals to printing on a base material including a primer layer as necessary, according to a printing method described later, thereby forming a colloidal crystal layer.

### [Colloidal crystal layer]

A method for forming the colloidal crystal layer is not particularly limited, and it can be formed using a publicly known printing method. Examples of the printing methods include plateless printing methods such as an inkjet method, a spray method, a dipping method, and a spin coating method; and plate printing methods which use, for example, an offset gravure coater, a gravure coater, a doctor coater, a bar coater, a blade coater, a flexo coater, and a roll coater.

It is sufficient to adjust the thickness of the colloidal crystal layer as appropriate depending on the required performance: however, it is usually in a range of 5 to 50 µm.

The interparticle gap in the colloidal crystal layer is preferably filled with air. This is because the colloidal crystals exhibit a stronger Bragg reflection as the difference in refractive index between the particle and the interparticle gap is larger, and the difference in refractive index is largest and the color developability is excellent in a case where the interparticle gap is filled with air.

It is noted that in a case where voids having a most frequent micropore diameter of 10 to 200 nm are detected in the colloidal crystal layer by the nitrogen adsorption method, it can be determined that the interparticle gap in the colloidal crystal layer is filled with air. Regarding the most frequent micropore diameter, a peak top in a nitrogen adsorption isotherm on an adsorption side, which is obtained by an analysis based on the Barrett-Joyner-Halenda method (BJH method), can be used as the most frequent micropore diameter. In the BJH method, a standard t curve is calculated using a Harkins-Jura type equation and analyzed based on the volume frequency distribution. For the measurement, for example, a device named BELSORP-max II manufactured by MicrotracBEL Corp. can be used.

### [Base material]

The base material is not particularly limited and can be selected as appropriate depending on the use application. Examples thereof include a thermoplastic resin base material such as a polyvinyl chloride sheet, a polyethylene terephthalate (PET) film, a polypropylene film, a polyethylene film, a nylon film, a polystyrene film, or a polyvinyl alcohol film; metal base material such as an aluminum foil; paper base material such as a glass base material or a coated paper; and a cloth base material.

In the base material, the coated surface may be flat or may be an uneven surface. In addition, the base material may be transparent, semitransparent, or opaque, and a base material that has been colored black or the like in advance may be used in order to make the color development of the colloidal crystal layer clearer. In addition, these base materials may be used alone or may be a multilayer body composed of two or more kinds of layers.

The thickness of the base material is not particularly limited and can be appropriately selected usually within a range of 5 to 500 µm.

### [Primer layer]

In order to further improve the fixity of the colloidal crystal layer on the base material, it is preferable that the base material has a primer layer. The primer layer can be formed by applying a resin composition for a primer layer on a base material in advance. The resin composition for a primer layer contains a resin component. The resin that forms the primer layer is not particularly limited, and examples include an acrylic resin, a styrene acrylic resin, a urethane resin, an olefin resin, a polyester resin, and a composite resin obtained by combining these resins. One kind of these resins may be used alone, or two or more kinds thereof may be used in combination.

From the viewpoints of binding properties to the base material or the colloidal crystal layer, the durability of the primer layer, and the like, the primer layer preferably contains an acrylic resin, a styrene acrylic resin, or a urethane resin. In addition, the primer layer may contain an additive within a range in which the effect of the present disclosure is not impaired. Such an additive includes, for example, an ultraviolet absorbing agent, a surfactant, or achromatic black particles.

The thickness of the primer layer is preferably 0.5 to 30 µm.

### [Thermosensitive recording article]

The multilayer body according to the present disclosure is characterized in that the shell of the colloidal crystal layer is fluidized by heating treatment to fill a void part. As a result, the developed color of the colloidal crystal layer fades, and a clear color change occurs. Therefore, the multilayer body according to the present disclosure can be used as a thermosensitive recording article.

The heating treatment method can be selected as appropriate within a range in which the effect of the present disclosure is not impaired. Examples thereof include a method of heating a multilayer body by applying a thermal head to the multilayer body using a thermal printer; a method of irradiating, with laser light, a photothermal conversion material in a laminate to absorb the light thereby heating the adjacent core-shell type resin fine particles; and oven heating, microwave heating, and boiling treatment.

Image formation using a laser is preferable because it makes it possible to carry out image formation without damaging the base material, the resin layer, or the nonimage forming part. In addition, it is preferable to use an infrared laser since it has a small adverse effect on the base material, the resin that forms the primer layer, and the core-shell type resin fine particles. Examples of the infrared laser marker include a CO₂ laser marker (wavelength: 10,600 nm), a YVO4 laser marker (wavelength: 1,064 nm), a YAG laser marker (wavelength: 1,064 nm), a fiber laser marker (wavelength 1,090 nm).

### [Photothermal conversion material]

A photothermal conversion agent serves to absorb laser light, convert the laser light into heat, and promote heating of the core-shell type resin fine particles in the adjacent colloidal crystal layer in a case where the multilayer body is irradiated with the laser light. Examples of the photothermal conversion agent include an organic material having absorption in the infrared region, an inorganic material, and a carbon material.

### [Examples]

Hereinafter, the present disclosure will be described in detail with reference to Examples. However, the present disclosure is not limited thereto. "Parts" and "%" in Examples and Comparative Examples mean "parts by mass" and "% by mass" unless otherwise specified.

### <Weight average molecular weight (Mw)>

The weight average molecular weight was determined as a polystyrene equivalent value according to a gel permeation chromatography (GPC) measurement under the following conditions. Specifically, a dried resin was dissolved in tetrahydrofuran to prepare a 0.1% solution, and the measurement was carried out using the following device and measurement conditions. For resins that are insoluble and difficult to be subjected to measurement due to the high molecular weight thereof, it was regarded that the weight average molecular weight thereof exceeded 1,000,000.
Device: HLC-8320-GPC system (manufactured by Tosoh Corporation) Column: TSKgel-SuperMultiporeHZ-M0021488
4.6 mm I. D. × 15 cm × 3 columns (molecular weight measurement range: approximately 2,000,000)
Elution solvent: Tetrahydrofuran
Standard substance: Polystyrene (manufactured by Tosoh Corporation)
Flow rate: 0.6 mL/min
Amount of sample solution used: 10 µL
Column temperature: 40°C

### <Average particle diameter and Cv value>

The average particle diameter was determined by diluting a fine particle dispersion 500 times with water, subjecting about 5 ml of the diluted solution to a measurement with a dynamic light scattering measurement method (measuring device: NANOTRAC UPA, manufactured by MicrotracBEL Corp.), and taking a peak of the obtained volume particle diameter distribution data (histogram) as the average particle diameter. In addition, the coefficient of variation Cv value which indicates the degree of uniformity of the particle diameters was calculated according to the following expression. Cv value (%) = standard deviation of particle diameter/average particle diameter × 100 [In the expression, the units of standard deviation and average particle diameter are the same.]

### <Glass transition point>

The glass transition point was measured with a differential scanning calorimeter (DSC) manufactured by TA Instruments. Specifically, approximately 2 mg of a sample obtained by drying a resin fine particle dispersion was weighed on an aluminum pan, the aluminum pan was set in a DSC measurement holder, and an endothermic peak in a baseline shift (inflection point) chart toward an endothermic side of a DSC curve was read, whereby the glass transition point was obtained, where the chart was obtained under a temperature rise condition of 5 °C/min.

### <Surface tension y>

The surface tension y used was a value measured according to the plate method (Wilhelmy method) under a condition of 25°C by using a surface tension meter (Automatic Surface Tension Meter DY-300) manufactured by Kyowa Interface Science Co., Ltd.

### <Viscosity>

The viscosity used was a value measured at a condition of 25°C by using a B-type viscometer at a rotor rotation speed of 30 rpm.

### <pH>

The pH used was a value that was obtained by using a portable pH meter (D-52) manufactured by Horiba, Ltd. in a case where the temperature of a solution was 25°C.

### <Acid value (AV)>

The acid value of the shell was obtained by carrying out a potentiometric titration using an obtained emulsion solution with a potassium hydroxide/ethanol solution in accordance with JIS K2501 and then carrying out the calculation. For the titration, an automatic titration device COM-1600 manufactured by HIRANUMA Co., Ltd. was used. Specifically, among the titration amounts (A1, A2, A3, and A3') corresponding to the four inflection points (P1, P2, P3, and P3') which had been obtained from a titration curve obtained by neutralization of acid groups in an aqueous phase within an emulsion containing core-shell type particles, (A3 - A1) was defined as a titration amount derived from the acid groups of the shell, and the acid value of the shell was calculated from this titration amount.

### <Manufacturing of core-shell type resin fine particle>

### [Manufacturing Example 1] Aqueous dispersion of core-shell type resin fine particles

79.0 parts of styrene, 20.0 parts of isobornyl methacrylate, 1.0 part of acrylic acid, 4.0 parts of a 25% aqueous solution of AQUALON AR-10 (manufactured by DKS Co., Ltd., anionic reactive surfactant (polyoxyethylene styrenated phenyl ether sulfate)) (solid content: 1.0 part), and 39.0 g of ion exchange water were mix and stirred to prepare a first-stage emulsified liquid of the ethylenically unsaturated monomer. 95.0 parts of ion exchange water and 1.5% of the first-stage emulsified liquid were added to a reaction container equipped with a stirrer, a thermometer, a dropping funnel, and a reflux device. The internal temperature of the reaction container was raised to 70°C to sufficiently carry out nitrogen replacement, and then 6.0 parts (solid content: 0.15 parts) of a 2.5% aqueous solution of potassium persulfate was added as an initiator to start polymerization. While raising the internal temperature to 80°C and then maintaining the temperature, the remainder of the emulsified liquid and 4.2 parts of a 2.5% aqueous solution of potassium persulfate (solid content: 0.11 parts) were reacted while being dropwise added over 2 hours, whereby core particles were synthesized.

Next, 27.6 parts of styrene, 13.2 parts of n-butyl acrylate, 2.2 parts of methacrylic acid, 1.7 parts of a 25% aqueous solution of AQUALON AR-10 (solid content: 0.4 parts), and 16.7 g of ion exchange water were mixed and stirred to prepare a second-stage emulsified liquid of the ethylenically unsaturated monomer. Twenty minutes after the completion of the first-stage dropwise addition, the second-stage dropwise addition of the emulsified liquid was started. While maintaining the internal temperature at 80°C, a reaction was allowed to proceed while dropwise adding the second-stage emulsified liquid and 1.6 parts of a 2.5% aqueous solution of potassium persulfate (solid content: 0.04 parts) over 2 hours, whereby an aqueous dispersion of core-shell type resin fine particles was obtained.

After the reaction, water was added to adjust the solid content to 45.0%. In addition, 1.7 parts of 25% aqueous ammonia (NH₃ (aq)) added to neutralize the core-shell type resin fine particles. The blending amount of the aqueous ammonia is equivalent to an amount (hereinafter referred to as one equivalent) that neutralizes all the carboxy groups contained in the shells. In the obtained fine particles, the average particle diameter was 248 nm, the Cv value was 12.9%, Tg of the core was 113.7°C, Tg of the shell was 51.8°C, and the *weight average molecular weight* of the shell was 177,000.

### [Manufacturing Examples 2 to 27] Aqueous dispersion of core-shell type resin fine particles

An aqueous dispersion of core-shell type resin fine particles was obtained in the same manner as in Manufacturing Example 1, except that the blending composition was changed as shown in Table 1 and Table 2. Water was charged into a reaction container so that the amount of the water was 67% with respect to the total amount of the ethylenically unsaturated monomer. An emulsified liquid of the ethylenically unsaturated monomer was prepared by adding water so that the concentration of the ethylenically unsaturated monomer in the emulsified liquid was 69% and the concentration of the surfactant was 0.69%. The 2.5% aqueous solution of potassium persulfate was distributed at the same rate as in Manufacturing Example 1, at the start of the reaction/during the dropwise addition of the first-stage emulsified liquid/during the dropwise addition of the second-stage emulsified liquid. In addition, one equivalent of aqueous ammonia was added with respect to the carboxy groups contained in the shells to neutralize the core-shell type resin fine particles.

It is noted that in Manufacturing Examples 6, 7, and 21, 0.2 parts, 0.1 parts, and 0.2 parts of octyl thioglycolate were further added, respectively, to the second-stage ethylenically unsaturated monomer to prepare the emulsified liquid. In Manufacturing Examples 19, 23, and 24, the solid content concentrations were adjusted to 20.0%, 30.0%, and 65.0%, respectively. In Manufacturing Example 20, ammonia was not added, and the core-shell type resin fine particles were not neutralized. In Manufacturing Examples 25 and 26, 0.1 equivalents and 0.2 equivalents of aqueous ammonia were added, respectively, with respect to the carboxy groups contained in the shells to neutralize the core-shell type resin fine particles. In Manufacturing Example 27, one equivalent of a potassium hydroxide aqueous solution was added with respect to the carboxy groups contained in the shells to neutralize the core-shell type resin fine particles.

**[Table 1]**

| | | Manufacturing Example | | | | | | | | | | | | | | |
|---|---|---|---|---|---|---|---|---|---|---|---|---|---|---|---|---|
| Ethylenically unsaturated monomer | | 1 | 2 | 3 | 4 | 5 | 6 | 7 | 8 | 9 | 10 | 11 | 12 | 13 | 14 | 15 |
| Core | Styrene | 79.0 | 58.0 | 44.0 | 70.0 | 79.0 | 59.0 | 79.0 | 79.0 | 79.0 | 79.0 | 79.0 | 79.0 | 79.0 | 79.0 | 79.0 |
| | Methyl methacr vlate | | 21.0 | | | | 20.0 | 20.0 | | | | | | | | |
| | Cyclohe xyl methacr vlate | | | 5.0 | | | | | | | | | | | | |
| | t-Butyl methacr vlate | | | 30.0 | | | | | 10.0 | | | | | | | |
| | Benzyl methacr vlate | | | | 9.0 | | | | | | | | | | | |
| | Isoborn yl methacr vlate | 20.0 | | | | 20.0 | | 20.0 | 10.0 | 20.0 | 10.0 | 20.0 | 20.0 | 20.0 | 200 | 200 |
| | Dicyclo pentanyl methacr vlate | | 20.0 | 200 | 20.0 | | | | | | 10.0 | | | | | |
| | Divinyl benzene | | | | | | 20.0 | | | | | | | | | |
| | 3-Methacr yloxypr opyltrim ethoxysi lane | | | | | | | 20.0 | | | | | | | | |
| | Acrylic acid | 1.0 | | 1.0 | 1.0 | 1.0 | 1.0 | 1.0 | 1.0 | 1.0 | 1.0 | 1.0 | 1.0 | 1.0 | 1.0 | 1.0 |
| | Methacr vlic acid | | 1.0 | | | | | | | | | | | | | |
| Shell | Styrene | 27.6 | 24.6 | 20.0 | 10.0 | 13.0 | 20.0 | 200 | 5.1 | 8.4 | 70.7 | 102. 9 | 27.6 | 27.6 | 15.8 | 8.0 |
| | Methyl methacr vlate | | 5.0 | | | | 7.6 | 7.6 | | | 20.0 | | | | | |
| | Cyclohe xyl methacr vlate | | | 9.4 | | | | | | | | | | | | |
| | Isobutyl methacr vlate | | | | | 6.0 | | | | | | | | | | |
| | t-Butyl methacr vlate | | | 3.2 | | | | | | | | | | | | |
| | Benzyl methacr vlate | | | | 11.2 | | | | | | | | | | | |
| | Ethyl acrylate | | 3.2 | | | | | | | | | | | | | |
| | n-Butyl acrylate | 13.2 | 10.0 | 6.8 | 13.2 | 13.2 | 13.2 | 13.2 | 2.5 | 4.0 | 23.3 | 20.0 | 12.7 | 11.9 | | 2.0 |
| | 2-Ethylhe xyl acrylate | | | 3.2 | | | | | | | 10.0 | | | | | |
| | Benzyl acrylate | | | | | | | | | | 10.0 | | | | | |
| | Phenoxy ethyl acrylate | | | | | | | | | | | 19.1 | | | | |
| | Hydrox ypropyl methacr vlate | | | | | | | | | | | | | | | |
| | Hydrox yethyl methacr vlate | | | | | | | | | | | 10.0 | | | | |
| | 2-Acetoac etoxyeth yl methacr vlate | | | | | | | | | | | | 0.5 | 1.3 | 25.0 | 30.8 |
| | Diaceto ne acrylami de | | | | | | | | | | | | | | | |
| | Acrylic acid | | | | | 4.0 | | | | | | | | | | |
| | Methacr vlic acid | 2.2 | 0.2 | 0.4 | 8.6 | 6.8 | 2.2 | 2.2 | 0.4 | 0.7 | 7.1 | 8.0 | 2.2 | 2.2 | 2.2 | 2.2 |
| Surfact ant | Total AQUAL ON AR-10 (solid content) | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 |
| Polyme rization initiator | Total potassiu m persulfat e (solid content) | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| Neutral ization | Neutrali zing agent | NH₃ (aq) | NH₃ (aq) | NH₃ (aq) | NH₃ (aq) | NH₃ (aq) | NH₃ (aq) | NH₃ (aq) | NH₃ (aq) | NH₃ (aq) | NH₃ (aq) | NH₃ (aq) | NH₃ (aq) | NH₃ (aq) | NH₃ (aq) | NH₃ (aq) |
| | Blendin g amount | 1 equi vale nt | 1 equi vale nt | 1 equi vale nt | 1 equi vale nt | 1 equi vale nt | 1 equi vale nt | 1 equi vale nt | 1 equi vale nt | 1 equi vale nt | 1 equi vale nt | 1 equi vale nt | 1 equi vale nt | 1 equi vale nt | 1 equi vale nt | 1 equi vale nt |
| Adjusted solid content (% by mass) | | 45.0 % | 45.0 % | 45.0 % | 45.0 % | 45.0 % | 45.0 % | 45.0 % | 45.0 % | 45.0 % | 45.0 % | 45.0 % | 45.0 % | 45.0 % | 45.0 % | 45.0 % |
| Average particle diameter (nm) | | 248 | 251 | 249 | 254 | 252 | 256 | 244 | 254 | 241 | 245 | 251 | 240 | 253 | 258 | 255 |
| Cv value (%) | | 12.9 | 11.9 | 13.7 | 13.5 | 13.3 | 13.7 | 13.9 | 13.6 | 14.0 | 13.0 | 12.6 | 12.2 | 11.1 | 13.0 | 11.1 |
| Shell content based on mass of core (% by mass) | | 43.0 | 43.0 | 43.0 | 43.0 | 43.0 | 43.0 | 30.7 | 8.0 | 13.0 | 141. 1 | 160. 0 | 43.0 | 43.0 | 43.0 | 43.0 |
| Core Tg (°C) | | 113. 7 | 115. 2 | 113. 2 | 108. 0 | 113. 7 | 112. 2 | 106. 3 | 107. 5 | 113. 7 | 113. 4 | 113. 7 | 113. 7 | 113. 7 | 113. 7 | 113. 7 |
| Shell Tg (°C) | | 51.8 | 53.5 | 54.8 | 53.5 | 54.4 | 52.4 | 52.4 | 51.8 | 51.8 | 56.9 | 73.4 | 53.1 | 55.2 | 66.4 | 47.5 |
| Amoun t of crosslin king group in shell (mmol/ g) | Carboxy group | 0.58 | 0.06 | 0.12 | 2.32 | 3.13 | 0.58 | 0.58 | 0.58 | 0.58 | 0.58 | 0.58 | 0.58 | 0.58 | 0.58 | 0.58 |
| | Hydrox yl group | 0.00 | 000 | 0.00 | 0.00 | 0.00 | 0.00 | 0.00 | 0.00 | 0.00 | 000 | 0.48 | 0.00 | 0.00 | 0.00 | 0.00 |
| | Keton group | 0.00 | 000 | 0.00 | 0.00 | 0.00 | 0.00 | 000 | 0 .0 0 | 0 .0 0 | 0.00 | 0.00 | 0.05 | 0.14 | 2.72 | 3.35 |
| Molecular weight of shell | | 177, 000 | 184, 000 | 184, 000 | 196, 000 | 194, 000 | 41,0 00 | 63,0 00 | 199, 000 | 196, 000 | 189, 000 | 174, 000 | 196, 000 | 184, 000 | 185, 000 | 198, 000 |
| Acid value of shell mgKOH/g | | 32.6 | 3.3 | 6.5 | 130. 3 | 175. 5 | 32.6 | 32.6 | 32.6 | 32.6 | 32.6 | 32.6 | 32.6 | 32.6 | 32.6 | 32.6 |

**[Table 2]**

| | | Manufacturing Example | | | | | | | | | | | |
|---|---|---|---|---|---|---|---|---|---|---|---|---|---|
| Ethylenically unsaturated monomer | | 16 | 17 | 18 | 19 | 20 | 21 | 22 | 23 | 24 | 25 | 26 | 27 |
| Core | Styrene | 70.0 | 50.0 | 79.0 | 79.0 | 79.0 | 70.0 | 79.0 | 79.0 | 79.0 | 79.0 | 79.0 | 79.0 |
| | Methyl methacrylate | | | | | | | | | | | | |
| | Cyclohexyl methacrylate | 29.0 | | | | | | | | | | | |
| | t-Butyl methacrylate | | | | | | | | | | | | |
| | Benzyl methacrylate | | 49.0 | | | | 9.0 | | | | | | |
| | Isobomyl methacrylate | | | 200 | 200 | 20.0 | | 20.0 | 20.0 | 20.0 | 20.0 | 20.0 | 200 |
| | Dicyclopenta nyl methacrylate | | | | | | 200 | | | | | | |
| | Divinylbenze ne | | | | | | | | | | | | |
| | 3-Methacryloxy propyltrimeth oxvsilane | | | | | | | | | | | | |
| | Acrylic acid | 1.0 | 1.0 | 1.0 | 1.0 | 1.0 | 1.0 | 1.0 | 1.0 | 1.0 | 1.0 | 1.0 | 1.0 |
| | Methacrylic acid | | | | | | | | | | | | |
| Shell | Styrene | 27.6 | 27.6 | 13.2 | 27.6 | 27.6 | 30.0 | 54.7 | 27.6 | 27.6 | 27.6 | 27.6 | 27.6 |
| | Methyl methacrylate | | | | | | | | | | | | |
| | Cyclohexyl methacrylate | | | | | | | | | | | | |
| | Isobutyl methacrylate | | | | | | | | | | | | |
| | t-Butyl methacrylate | | | | | | | | | | | | |
| | Benzyl methacrylate | | | | | | 33.6 | | | | | | |
| | Ethyl acrylate | | | | | | | | | | | | |
| | n-Butyl acrylate | 5.0 | 13.2 | 27.6 | 13.2 | 13.2 | 24.6 | 26.1 | 13.2 | 13.2 | 13.2 | 13.2 | 13.2 |
| | 2-Ethylhexyl acrylate | | | | | | | | | | | | |
| | Benzyl acrylate | | | | | | | | | | | | |
| | Phenoxyethyl acrylate | | | | | | | | | | | | |
| | Hydroxyprop yl methacrylate | 5.0 | | | | | | | | | | | |
| | Hydroxyethyl methacrylate | | | | | | | | | | | | |
| | 2-Acetoacetoxy ethyl methacrylate | | | | | | | | | | | | |
| | Diacetone acrylamide | 3.0 | | | | | | | | | | | |
| | Acrylic acid | | | | | | | | | | | | |
| | Methacrylic acid | 2.2 | 2.2 | 2.2 | 2.2 | 2.2 | 16.0 | 4.3 | 2.2 | 2.2 | 2.2 | 2.2 | 2.2 |
| Surfa ctant | Total AQUALON AR-10 (solid content) | 1.4 | 1.4 | 1.4 | 1.4 | 1.4 | 1.4 | 1.4 | 1.4 | 1.4 | 1.4 | 1.4 | 1.4 |
| Poly meriz ation initiat or | Total potassium persulfate (solid content) | 0.3 | 0.3 | 0.3 | 0.3 | 0.3 | 0.3 | 0.3 | 0.3 | 0.3 | 0.3 | 0.3 | 0.3 |
| | Neutralizing agent | NH₃ (aq) | NH₃ (aq) | NH₃ (aq) | NH₃ (aq) | - | NH₃ (aq) | NH₃ (aq) | NH₃ (aq) | NH₃ (aq) | NH₃ (aq) | NH₃ (aq) | KOH (aq) |
| Neutralization | Blending amount | 1 equiva lent | 1 equiva lent | 1 equiva lent | 1 equiva lent | - | 1 equiva lent | 1 equiva lent | 1 equiva lent | 1 equiva lent | 0.1 equiva lent | 0.2 equiva lents | 1 equiva lent |
| Adjusted solid content (% by mass) | | 45.0% | 45.0% | 45.0% | 20.0% | 45.0% | 45.0% | 45.0% | 30.0% | 65.0% | 450% | 45.0% | 45.0% |
| Average particle diameter (nm) | | 258 | 260 | 256 | 248 | 248 | 254 | 241 | 248 | 252 | 253 | 246 | 248 |
| Cv value (%) | | 11.7 | 13.5 | 12.9 | 12.9 | 12.9 | 13.5 | 14.0 | 12.9 | 13.1 | 13.9 | 13.1 | 12.8 |
| Shell content based on mass of core (% by mass) | | 42.8 | 43.0 | 43.0 | 43.0 | 43.0 | 104.2 | 85.0 | 43.0 | 43.0 | 43.0 | 43.0 | 43.0 |
| Core Tg (°C) | | 89.5 | 76.0 | 113.7 | 113.7 | 113.7 | 108.0 | 113.7 | 113.7 | 113.7 | 113.7 | 113.7 | 113.7 |
| Shell Tg (°C) | | 80.4 | 51.8 | 0.6 | 51.8 | 51.8 | 61.1 | 51.8 | 51.8 | 51.8 | 51.8 | 51.8 | 51.8 |
| Amou nt of crossl inking group in shell( mmol /g) | Carboxy group | 0.58 | 0.58 | 0.58 | 0.58 | 0.58 | 1.79 | 0.58 | 0.58 | 0.58 | 0.58 | 0.58 | 0.58 |
| | Hydroxyl group | 0.81 | 0.00 | 0.00 | 0.00 | 0.00 | 0.00 | 0.00 | 0.00 | 0.00 | 0.00 | 0.00 | 0.00 |
| | Ketone group | 0.41 | 000 | 0.00 | 0.00 | 000 | 000 | 000 | 000 | 0.00 | 0.00 | 000 | 0.00 |
| Molecular weight of shell | | 199,0 00 | 197,0 00 | 185,0 00 | 177,0 00 | 177,0 00 | 43,00 0 | 196,0 00 | 177,0 00 | 180,0 00 | 193,0 00 | 178,0 00 | 179,00 0 |
| Acid value of shell mgKOH/g | | 32.7 | 32.6 | 32.6 | 32.6 | 32.6 | 100.1 | 32.6 | 32.6 | 32.6 | 32.6 | 32.6 | 32.6 |

### <Manufacturing of resin that forms primer layer>

### [Manufacturing Example 28] Aqueous dispersion of styrene acrylic resin

30.7 parts of styrene, 64.2 parts of n-butyl acrylate, 5.0 parts of methacrylic acid, 5.6 parts of a 25% aqueous solution of AQUALON AR-10 (solid content: 1.4 parts), and 40.4 g of ion exchange water were mixed and stirred to prepare an emulsified liquid of the ethylenically unsaturated monomer.

68.9 parts of ion exchange water and 3% of the emulsified liquid were added to a reaction container equipped with a stirrer, a thermometer, a dropping funnel, and a reflux device, the internal temperature of the reaction container was raised to 80°C to sufficiently carry out nitrogen replacement, and then 6.0 parts (solid content: 0.15 parts) of a 2.5% aqueous solution of potassium persulfate was added as an initiator to start emulsion polymerization. While maintaining the internal temperature at 80°C, the remainder of the emulsified liquid and 6.0 parts of a 2.5% aqueous solution of potassium persulfate (solid content: 0.15 parts) were dropwise added over 3 hours, and the reaction was further carried out for 4 hours to obtain an aqueous dispersion of a styrene acrylic resin. After the completion of the reaction, 3.9 parts of 25% aqueous ammonia was added to carry out neutralization, and the solid content of the aqueous dispersion was adjusted to 45.0% with ion exchange water.

### [Manufacturing Examples 29 and 30] Aqueous dispersion of styrene acrylic resin

An aqueous dispersion of a styrene acrylic resin was obtained in the same manner as in Manufacturing Example 22, except that the blending composition was changed as shown in Table 3. Water was charged into a reaction container so that the amount of the water was 67% with respect to the total amount of the ethylenically unsaturated monomer. An emulsified liquid of the ethylenically unsaturated monomer was prepared by adding water so that the concentration of the ethylenically unsaturated monomer in the emulsified liquid was 69% and the concentration of the surfactant was 0.69%. In addition, one equivalent of ammonia was added with respect to the carboxy groups contained in the resin to neutralize the styrene acrylic resin.

**[Table 3]**

| | | Manufacturing Example | | |
|---|---|---|---|---|
| | | 28 | 29 | 30 |
| Ethylenically unsaturated monomer | Styrene | 30.7 | 30.7 | 30.7 |
| | Methyl methacrylate | | | |
| | Cyclohexyl methacrylate | | | |
| | Isobutyl methacrylate | | | |
| | t-Butyl methacrylate | | | |
| | Benzyl methacrylate | | | |
| | Ethyl acrylate | | | |
| | n-Butyl acrylate | 64.2 | 54.9 | 54.9 |
| | 2-Ethylhexyl acrylate | | | |
| | Benzyl acrylate | | | |
| | Phenoxyethyl acrylate | | | |
| | Hydroxypropyl methacrylate | | 12.1 | |
| | Hydroxyethyl methacrylate | | | |
| | 2-Acetoacetoxy ethyl methacrylate | | | 12.1 |
| | Diacetone acrylamide | | | |
| | Acrylic acid | | | |
| | Methacrylic acid | 5.0 | 2.3 | 2.3 |
| Surfactant | Total AQUALON AR-10 (solid content) | 1.4 | 1.4 | 1.4 |
| Polymerization initiator | Total potassium persulfate (solid content) | 0.3 | 0.3 | 0.3 |
| Average particle diameter (nm) | | 248 | 251 | 247 |
| Cv value (%) | | 13.4 | 12.9 | 12.1 |
| Shell Tg (°C) | | 0.0 | 0.0 | 0.0 |
| Amount of crosslinking group in shell (mmol/g) | Carboxy group | 0.58 | 0.27 | 0.27 |
| | Hydroxyl group | 0.00 | 0.84 | 0.00 |
| | Ketone group | 0.00 | 0.00 | 0.56 |
| Molecular weight | | 189,000 | 176,000 | 191,000 |
| Acid value mgKOH/g | | 32.6 | 15.2 | 15.2 |

### <Preparation of resin composition for primer layer>

### [Manufacturing Example 31] Resin composition for primer layer

To 100.0 parts of the aqueous dispersion of the styrene acrylic resin of Manufacturing Example 28, 1.0 part of EMULGEN 1108 (manufactured by Kao Corporation, an ether-based nonionic surfactant) was added as a surfactant and stirred to prepare a resin composition for a primer layer.

### [Manufacturing Example 32] Resin composition for primer layer

A resin composition for a primer layer was prepared according to the same method as in Manufacturing Example 31, except that 100.0 parts of the aqueous dispersion of the styrene acrylic resin of Manufacturing Example 29 was changed to 100.0 parts of the aqueous dispersion of the styrene acrylic resin of Manufacturing Example 23.

### [Manufacturing Example 33] Resin composition for primer layer

A resin composition for a primer layer was prepared according to the same method as in Manufacturing Example 31, except that 100.0 parts of the aqueous dispersion of the styrene acrylic resin of Manufacturing Example 30 was changed to 100.0 parts of the aqueous dispersion of the styrene acrylic resin of Manufacturing Example 24.

### <Preparation of composition for colloidal crystals>

### [Example 1]

To 100.0 parts of the aqueous dispersion of the core-shell resin fine particles of Manufacturing Example 1, 0.5 parts of EMULGEN 1108 (manufactured by Kao Corporation, an ether-based nonionic surfactant), 1.0 part of SURFYNOL 420 (manufactured by Nissin Chemical Industry Co., Ltd., an acetylene-based nonionic surfactant), and 0.9 parts of DENACOL EX-614B (manufactured by Nagase ChemteX Corporation, a water-soluble polyfunctional epoxy compound) as a crosslinking agent were added and stirred to prepare a composition for colloidal crystals.

In the obtained composition for colloidal crystals, the surface tension was 32.3 mN/m in an environment of 25°C, the viscosity was 22.4 mPa·s in an environment of 25°C, and the pH was 9.64 in an environment of 25°C.

### [Examples 2 to 23 and Comparative Examples 1 to 5]

A composition for colloidal crystals was prepared in the same manner as in Example 1, except that the blending composition was changed as shown in Table 4 and Table 5.

### <Evaluation of composition for colloidal crystals>

The obtained composition for colloidal crystals was evaluated as follows. The results are shown in Table 4 and Table 5.

### [Coating applicability]

A corona-treated surface of a Toyobo Ester Film E5100 was coated with the obtained composition for colloidal crystals by using a bar coater #9 and dried at 50°C for 3 minutes. The obtained coating film was visually evaluated for the unevenness or cissing of the coating film.
S: Cissing or unevenness is not observed (very good).
A: The area in which cissing or unevenness occurred is less than 1% of the entire coating film (good).
B: The area in which cissing or unevenness occurred is 1% or more and less than 5% (usable).
C: The area in which cissing or unevenness occurred is 5% or more (unusable).

### [Long-term stability]

The viscosity of the composition for colloidal crystals was measured before and after being allowed to stand at 40°C for 1 month, 2 months, and 3 months, and the long-term stability was evaluated from the difference between the viscosity before and after being allowed to stand.
S: The absolute value of the viscosity change after being allowed to stand for 3 months is 50 mPa·s or less (very good).
A: The absolute value of the viscosity change after being allowed to stand for 2 months is 50 mPa·s or less (good).
B: The absolute value of the viscosity change after being allowed to stand for 1 month is 50 mPa·s or less (usable).
C: The absolute value of viscosity change is more than 50 mPa·s after being allowed to stand for 1 month (unusable).

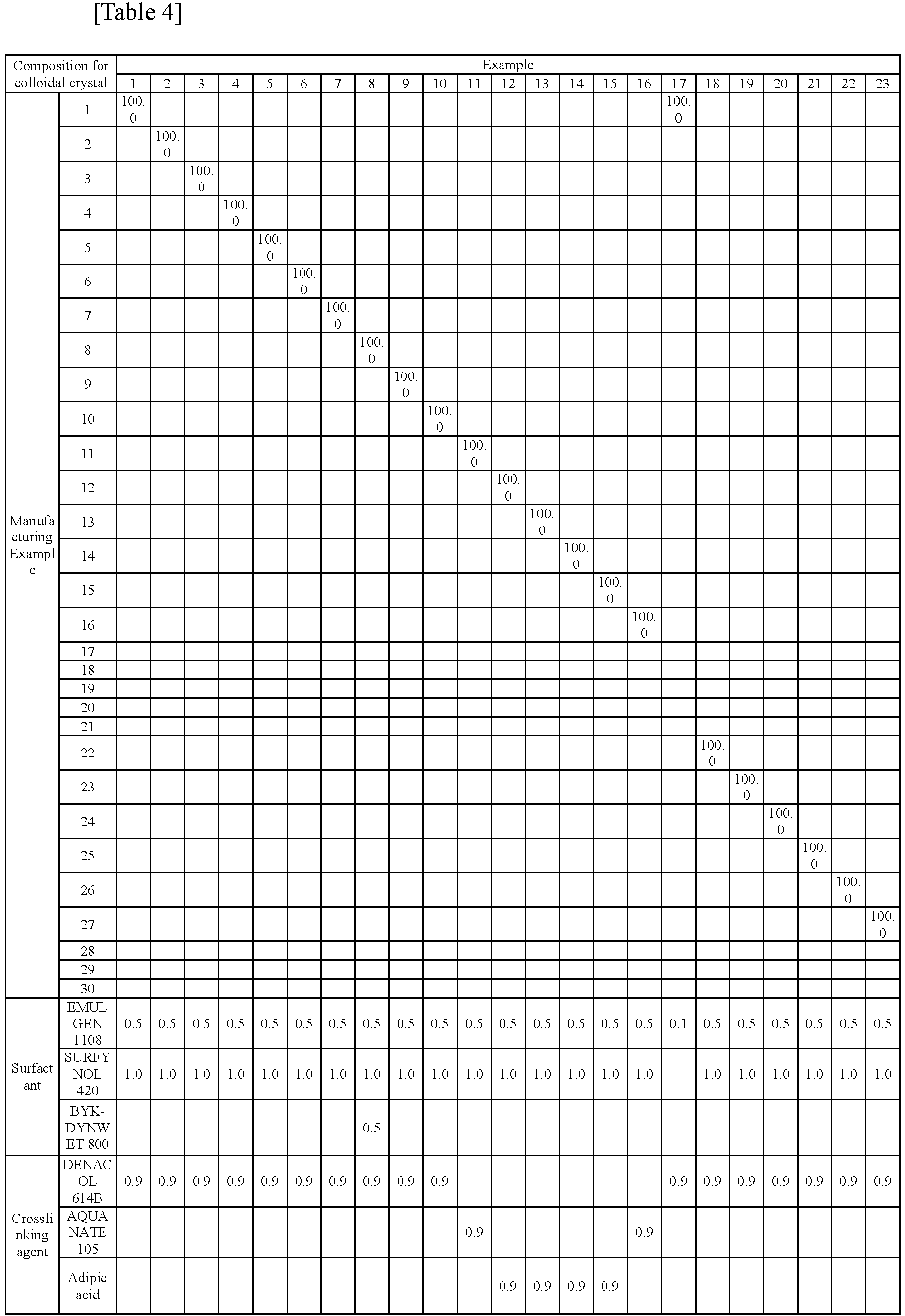

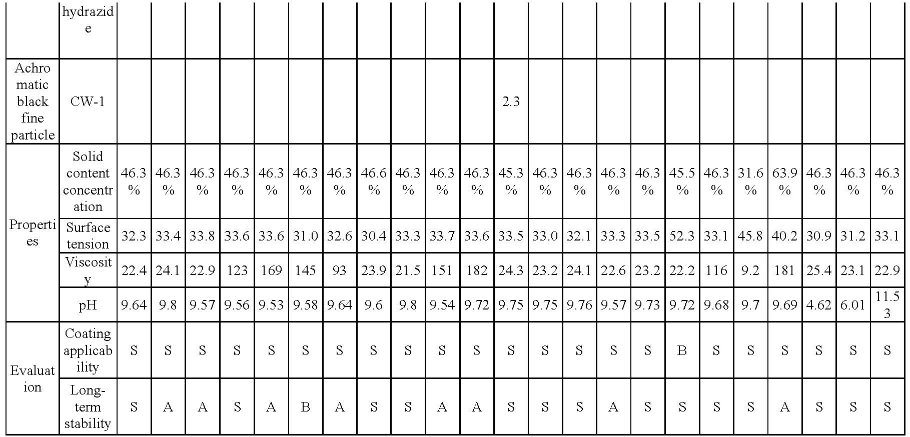

**[Table 5]**

| Composition for colloidal crystal | | Comparative Example | | | | |
|---|---|---|---|---|---|---|
| | | 1 | 2 | 3 | 4 | 5 |
| Manufacturing Example | 1 | | | | | |
| | 2 | | | | | |
| | 3 | | | | | |
| | 4 | | | | | |
| | 5 | | | | | |
| | 6 | | | | | |
| | 7 | | | | | |
| | 8 | | | | | |
| | 9 | | | | | |
| | 10 | | | | | |
| | 11 | | | | | |
| | 12 | | | | | |
| | 13 | | | | | |
| | 14 | | | | | |
| | 15 | | | | | |
| | 16 | | | | | |
| | 17 | 100.0 | | | | |
| | 18 | | 100.0 | | | |
| | 19 | | | 100.0 | | |
| | 20 | | | | 100.0 | |
| | 21 | | | | | 100.0 |
| | 22 | | | | | |
| | 23 | | | | | |
| | 24 | | | | | |
| | 25 | | | | | |
| | 26 | | | | | |
| | 27 | | | | | |
| | 28 | | | | | |
| | 29 | | | | | |
| | 30 | | | | | |
| Surfactant | EMULGEN 1108 | 0.5 | 0.5 | 0.5 | 0.5 | 0.5 |
| | SURFYNOL 420 | 1.0 | 1.0 | 1.0 | 1.0 | 1.0 |
| | BYK-DYNWET 800 | | | | | |
| Crosslinking agent | DENACOL 614B | 0.9 | 0.9 | 0.9 | 0.9 | 0.9 |
| | AQUANATE 105 | | | | | |
| | Adipic acid hydrazide | | | | | |

The abbreviations in Table 4 and Table 5 are shown below.
EMULGEN 1108: Nonionic non-reactive surfactant (a polyoxyethylene alkyl ether, manufactured by Kao Corporation, solid content: 100%)
SURFYNOL 420: Nonionic non-reactive surfactant (acetylene glycols, manufactured by Nissin Chemical Co., Ltd., solid content: 100%)
BYK-DYNWET 800: Nonionic non-reactive surfactant (alcohol alkoxylates, manufactured by BYK JAPAN KK, solid content: 100%)
DENACOL 614B: Water-soluble polyfunctional epoxy compound (manufactured by Nagase ChemteX Corporation, solid content: 100%)
AQUANATE 105: Water-soluble polyfunctional isocyanate compound (manufactured by Tosoh Corporation, solid content: 100%)
CW-1: Surface-modified carbon black BONJET BLACK CW-1 (manufactured by ORIENT CHEMICAL INDUSTRIES CO., LTD., average particle diameter: 62 nm, solid content: 20.0%)

### <Evaluation of multilayer body>

Using the obtained composition for colloidal crystals, a multilayer body was produced as follows and evaluated. The results are shown in Table 6 together with the evaluation results of the composition for colloidal crystals described above.

### [Manufacturing of multilayer body]

A corona-treated surface of a Toyobo Ester Film E5100 was coated with the resin composition for a primer layer shown in Table 6 by using a bar coater so that the thickness after drying was 3.0 mm, and then drying was carried out in an oven at 50°C for 3 minutes to from a primer layer. Next, the composition for a colloidal crystal shown in Table 6 was applied onto the primer layer by selecting a bar coater so that the thickness after drying was 10.0 µm, and then drying was carried out at 50°C for 3 minutes to obtain a multilayer body having a configuration of PET / primer layer/ colloidal crystal layer. The obtained multilayer body was further heated at 80°C for 5 minutes.

It is noted that regarding the composition for colloidal crystals of Example 1, a multilayer body having a configuration of PET / colloidal crystal layer was also manufactured, where a primer layer was not formed but a colloidal crystal layer was directly formed on a Toyobo Ester Film E5100 in the multilayer body.

### [Void between particles]

The presence or absence of voids in the colloidal crystal layer was determined as follows.

First, the obtained multilayer body was subjected to an analysis based on the Barrett-Joyner-Halenda method (BJH method) to determine a peak top in a nitrogen adsorption isotherm on an adsorption side, as the most frequent micropore diameter.

In the BJH method, a standard t curve was calculated using a Harkins-Jura type equation and analyzed based on the volume frequency distribution. For the measurement, a device named BELSORP-max II manufactured by MicrotracBEL Corp. was used.

In a case where voids having a most frequent micropore diameter of 10 to 200 nm were detected by the nitrogen adsorption method, it was determined that the interparticle gap in which the colloidal crystal layer is formed is filled with air, and it was evaluated that voids are present.

### [Color developability]

A reflection spectrum of the multilayer body was measured in a wavelength range of 350 to 850 nm by using an ultraviolet-visible near-infrared spectrophotometer (V-770D, manufactured by JASCO Corporation, integrating sphere unit: ISN-923). The reflectance at each wavelength is a relative reflectance that is measured using, as a reference, a standard white plate (SRS-99-010, manufactured by Labsphere, Inc.) having a known reflectance. The reflection spectra of all the multilayer bodies were measured from the colloidal crystal layer side. Regarding the obtained reflection spectrum, a difference (ΔR) between the maximum value of the reflectance derived from the structural color and the baseline reflectance independent of the structural color was calculated.

The larger ΔR is, the more excellent the color developability is. The obtained ΔR was evaluated based on the following criteria.
S: ΔR is 20% or more (very good).
A: ΔR is 10% or more and less than 20% (good).
B: ΔR is 5% or more and less than 10% (usable).
C: ΔR is less than 5%, or the peak of the reflectance derived from the structural color cannot be determined (unusable).

### [Heat resistance]

After the multilayer body was allowed to stand at 40°C for 1 month, 2 months, and 3 months, the reflection spectrum was measured in the same manner as in the color developability test described above. The reflection spectra before and after the heat resistance test were compared to calculate the rate of change (rate of decrease) in the maximum value of reflectance. It is indicated that the larger the rate of decrease is, the worse the color development of the multilayer body is. Based on the obtained rate of decrease, the heat resistance of the multilayer body was evaluated based on the following criteria.
S: The rate of change in the maximum value of reflectance after 3 months is less than 20% (very good).
A: The rate of change in the maximum value of reflectance after 2 months is less than 20% (good).
B: The rate of change in the maximum value of reflectance after 1 month is less than 20% (usable).
C: The rate of change in the maximum value of reflectance after 1 month is 20% or more (unusable).

### [Abrasion resistance]

The multilayer body was placed on a smooth glass plate with the colloidal crystal layer facing upward, and a region of a 2 cm × 2 cm square was rubbed 40 times with the ball of the thumb, and a state of scratching or peeling was visually observed. The evaluation criteria are as follows.
S: No scratching or peeling is observed (very good).
A: The area in which scratching or peeling has occurred is less than 1% (good).
B: The area in which scratching or peeling has occurred is 1% or more and less than 5% (usable).
C: The area in which scratching or peeling has occurred is 5% or more (unusable).

### [Base material adherence]

A test piece having a size of a 2 cm × 2 cm square test was cut out from the multilayer body. After bending the test piece 20 times, the appearance of the colloidal crystal layer side was observed. The evaluation criteria are as follows.
S: No scratching or peeling is observed (very good).
A: The area in which scratching or peeling has occurred is less than 1% (good).
B: The area in which scratching or peeling has occurred is 1% or more and less than 5% (usable).
C: The area in which scratching or peeling has occurred is 5% or more (unusable).

**[Table 6]**

| | | | Example | | | | | | | | | | | | |
|---|---|---|---|---|---|---|---|---|---|---|---|---|---|---|---|
| | | | 1 | | 2 | 3 | 4 | 5 | 6 | 7 | 8 | 9 | 10 | 11 | 12 |
| Colloidal crystal layer | Properti es | Solid content concentratio n | 46.3% | 46.3% | 46.3% | 46.3% | 46.3% | 46.3% | 46.3% | 46.3% | 46.6% | 46.3% | 46.3% | 46.3% | 45.3% |
| | | Surface tension | 32.3 | 32.3 | 33.4 | 33.8 | 33.6 | 33.6 | 31 | 32.6 | 30.4 | 33.3 | 33.7 | 33.6 | 33.5 |
| | | Viscosity | 22.4 | 22.4 | 24.1 | 22.9 | 123 | 169 | 145 | 93 | 23.9 | 21.5 | 151 | 182 | 24.3 |
| | | pH | 9.64 | 9.64 | 9.8 | 9.57 | 9.56 | 9.53 | 9.58 | 9.64 | 9.6 | 9.8 | 9.54 | 9.72 | 9.75 |
| | Thickness (µm) | | 10.0 | 10.0 | 10.0 | 10.0 | 10.0 | 10.0 | 10.0 | 10.0 | 10.0 | 10.0 | 10.0 | 10.0 | 10.0 |
| Primer layer | Manufacturing Example | | 25 | - | 25 | 25 | 25 | 25 | 25 | 25 | 25 | 25 | 25 | 26 | 27 |
| | Thickness (µm) | | 3.0 | - | 3.0 | 3.0 | 3.0 | 3.0 | 3.0 | 3.0 | 3.0 | 3.0 | 3.0 | 3.0 | 3.0 |
| Evaluatio n | Compos ition | Coating applicability | S | S | S | S | S | S | S | S | S | S | S | S | S |
| | | Long-term stability | S | S | A | A | S | A | B | A | S | S | A | A | S |
| | Multilay er body | Void between particles | Presen t | Presen t | Presen t | Presen t | Presen t | Presen t | Presen t | Presen t | Presen t | Presen t | Presen t | Presen t | Presen t |
| | | Color developabili ty | S | S | B | A | A | B | A | S | S | S | A | A | S |
| | | Heat resistance | S | S | S | S | S | S | S | S | S | S | S | A | S |
| | | Abrasion resistance | S | B | S | S | S | S | S | S | A | S | S | S | A |
| | | Base material adherence | S | B | S | S | S | S | S | S | A | S | S | S | A |

| | | | Example | | | | | | | | | | |
|---|---|---|---|---|---|---|---|---|---|---|---|---|---|
| | | | 13 | 14 | 15 | 16 | 17 | 18 | 19 | 20 | 21 | 22 | 23 |
| Colloidal crystal layer | Properties | Solid content concentration | 46.3% | 46.3% | 46.3% | 46.3% | 45.5% | 46.3% | 31.6% | 63.9% | 46.3% | 46.3% | 46.3% |
| | | Surface tension | 33 | 32.1 | 33.3 | 33.5 | 52.3 | 33.1 | 45.8 | 40.2 | 30.9 | 31.2 | 33.1 |
| | | Viscosity | 23.2 | 24.1 | 22.6 | 23.2 | 22.2 | 116 | 9.2 | 181 | 25.4 | 23.1 | 22.9 |
| | | pH | 9.75 | 9.76 | 9.57 | 9.73 | 9.72 | 9.68 | 9.7 | 9.69 | 4.62 | 6.01 | 11.53 |
| | Thickness (µm) | | 10.0 | 10.0 | 10.0 | 10.0 | 10.0 | 10.0 | 10.0 | 10.0 | 10.0 | 10.0 | 10.0 |
| Primer layer | Manufacturing Example | | 27 | 27 | 27 | 26 | 25 | 25 | 25 | 25 | 25 | 25 | 25 |
| | Thickness (µm) | | 3.0 | 3.0 | 3.0 | 3.0 | 3.0 | 3.0 | 3.0 | 3.0 | 3.0 | 3.0 | 3.0 |
| Evaluation | Composition | Coating applicability | S | S | S | S | B | S | S | S | S | S | S |
| | | Long-term stability | S | S | A | S | S | S | S | A | S | S | S |
| | Multilayer body | Void between particles | Present | Present | Present | Present | Present | Present | Present | Present | Present | Present | Present |
| | | Color developability | S | S | S | S | S | S | A | A | S | S | S |
| | | Heat resistance | S | S | S | A | S | S | S | S | S | S | S |
| | | Abrasion resistance | S | S | S | S | A | S | S | S | S | S | S |
| | | Base material adherence | S | S | S | S | A | S | S | S | S | S | S |

| | | | Comparative Example | | | | |
|---|---|---|---|---|---|---|---|
| | | | 1 | 2 | 3 | 4 | 5 |
| Colloidal crystal layer | Properties | Solid content concentration | 46.3% | 46.3% | 21.9% | 46.3% | 46.3% |
| | | Surface tension | 33.9 | 32 | 52.2 | 31.1 | 31.9 |
| | | Viscosity | 23.1 | 21.2 | 5.4 | 22.5 | 231 |
| | | pH | 9.66 | 9.66 | 9.51 | 2.36 | 9.39 |
| | Thickness (µm) | | 10.0 | 10.0 | 10.0 | 10.0 | 10.0 |
| Primer layer | Manufacturing Example | | 25 | 25 | 25 | 25 | 25 |
| | Thickness (µm) | | 3.0 | 3.0 | 3.0 | 3.0 | 3.0 |
| Evaluation | Composition | Coating applicability | S | S | C | S | S |
| | | Long-term stability | S | S | S | C | C |
| | Multilayer body | Void between particles | Present | Present | Present | Present | Present |
| | | Color developability | S | S | C | C | C |
| | | Heat resistance | C | C | S | S | S |
| | | Abrasion resistance | S | S | S | S | S |
| | | Base material adherence | S | S | S | S | S |

According to Tables 4 to 6, the composition for colloidal crystals according to the invention of the present application, which contains water and core-shell type resin fine particles having a core having a predetermined Tg and a shell having a predetermined Tg, and satisfies a predetermined solid content concentration, pH, and viscosity, had excellent coating applicability and excellent long-term stability. In addition, the colloidal crystal layer that is formed by using the composition for colloidal crystals according to the present disclosure exhibited excellent color developability and excellent heat resistance. On the other hand, the compositions for colloidal crystals of Comparative Examples were inferior in some respects.

In particular, the composition for colloidal crystals of Example 7 in which the molecular weight of the shell of the core-shell type resin fine particle is 50,000 or more had excellent long-term stability as compared with the composition for colloidal crystals in Example 6 in which the molecular weight of the shell is less than 50,000. In addition, the colloidal crystal layer that is formed by using the composition for colloidal crystals for colloidal crystals of Example 7 had excellent color developability as compared with the composition for colloidal crystals of Example 6.

This application claims priority based on Japanese Patent Application No. 2021-212995 filed on December 27, 2021, and the entire disclosure thereof is incorporated herein.

## Claims

1. A composition for colloidal crystals, comprising:
core-shell type resin fine particles; and
water,
wherein the composition for colloidal crystals satisfies the following conditions (1) to (5),
(1) a solid content concentration is 25% by mass or more,
(2) a pH in an environment at 25°C is 4 to 14,
(3) a viscosity in the environment at 25°C is 0.1 to 200 mPa s,
(4) a glass transition point of cores in the core-shell type resin fine particles is 80°C or higher, and
(5) a glass transition point of shells in the core-shell type resin fine particles is 40°C or higher.

2. The composition for colloidal crystals according to Claim 1, wherein a resin that forms the shells of the core-shell type resin fine particles has an acid value of 5 to 150 mgKOH/g.

3. The composition for colloidal crystals according to Claim 1 or 2, wherein a resin that forms the shells of the core-shell type resin fine particles has an average molecular weight of 50,000 or more.

4. The composition for colloidal crystals according to any one of Claims 1 to 3, wherein a content of the shells in the core-shell type resin fine particles is 10% to 150% by mass based on a mass of the cores.

5. The composition for colloidal crystals according to any one of Claims 1 to 4, wherein a surface tension in the environment at 25°C is 10 to 50 mN/m.

6. A multilayer body comprising:
a colloidal crystal layer that is formed, on a base material, by using the composition for colloidal crystals according to any one of Claims 1 to 5.
